# EUROPEAN PATENT APPLICATION

(11) **EP 4 253 251 A1**
(43) Date of publication of application: **04.10.2023**
(21) Application number: 22164861.1
(22) Date of filing: 28.03.2022
(51) Int. Cl.: B64D 33/08, B64C 29/00

(54) **AN ELECTRICALLY DRIVEN PROPULSION UNIT OF AN AERIAL VEHICLE, AN AERIAL VEHICLE AND A CONTROL METHOD FOR AN ELECTRICALLY DRIVEN PROPULSION UNIT**

(71) Applicant: Lilium eAircraft GmbH, 82234 Wessling (DE)
(72) Inventor: Laveau, Benoit, 82234 Wessling (DE); Vermeirenent, Sebastien, 82234 Wessling (DE)
(74) Representative: Grünecker Patent- und Rechtsanwälte PartG mbB

(57) **Abstract**

An electrically driven propulsion unit (3) of an aerial vehicle (1) comprising: at least one, preferably electric or electronic, heat source (M, T);a propulsion force generating air flow path (10) along which air for generating a propulsion force is configured to flow. In order to provide efficient cooling to the heat source, the propulsion unit (3) further comprises a branch-off portion (11) which is configured to branch-off part of the air flow flowing along the propulsion force generating air flow path (10), wherein the propulsion unit (3) is configured such that the at least one heat source (M, T) is cooled via the air flow supplied by the branch-off portion (11).

## Description

The present invention relates to an electrically driven propulsion unit of an aerial vehicle, an aerial vehicle and a control method for an electrically driven propulsion unit.

A vertical-take-off aerial vehicle is known from US 10 293 914 B2. Therein, a propulsion unit, whose thrust axis is pivotable with respect to a lift body, is electrically driven. The electrical drive of a fan as a rotating unit of the propulsion unit requires an electric motor and electronical devices related to the control of the electric motor and the fan. In order to ensure proper operation of these electrical devices, it is necessary to cool these electrical devices. Known configurations for cooling said electrical devices comprise liquid cooling, cooling by phase change or providing large cooling structures to said devices.

These cooling configurations are rather complex and heavy to ensure reliable cooling. In addition, there are concerns regarding noise generation and flight performance impact due to the complex structures.

The present invention has been made in view of the aforementioned issues and it is an object of the present invention to provide efficient cooling to heat sources of an electrically driven propulsion unit.

The above object is achieved by an electrically driven propulsion unit of an aerial vehicle according to claim 1, an aerial vehicle according to claim 14, and a control method according to claim 15.

According to a first aspect, an electrically driven propulsion unit of an aerial vehicle is provided which comprises: at least one heat source; a propulsion force generating airflow path along which air for generating a propulsion force is configured to flow.

With respect to US 10 293 914 B2, the propulsion unit according to the first aspect is, in particular, characterized by a branch-off portion which is configured to branch-off part of the air flow flowing along the propulsion force generating airflow path and being configured such that the heat source is cooled via the air flow supplied by the branch-off portion.

According to the first aspect, an air flow for generating a propulsion force of the propulsion unit is used for cooling of at least one heat source. Therefore, other cooling mediums such as water of phase changing mediums need not be provided. Rather, for cooling, it can be resorted to an airflow which is generated anyway in order to create a propulsion force. Therefore, complexity of the cooling configuration and the entire propulsion unit can be reduced.

By supplying the branched-off air flow to the at least one heat source, a direct interaction of the heat source with the propulsion force generating air flow can be avoided. Hence, noise and aerodynamic drawbacks due to aerodynamic forces such as drag can be reduced while the functionality of electric and electronic components representing heat sources can be maintained due to the cooling.

The propulsion force generating air flow path may be an air flow path traversed by air due to rotation of a rotating unit such as a fan or compressor. The propulsion force generating air flow path may be an internal flow path of the propulsion unit. It may be directly or indirectly used to generate the propulsion force. Preferably, the propulsion force generating air flow path is an air flow path directly generating thrust. Particularly, it may be an air flow path generating the main component of the propulsion force, such as, at least 80%.

Preferably, the branch-off portion comprises a guiding portion configured to guide at least part of the branched-off air flow towards and/or along, the at least one heat source.

For that reason, the cooling efficiency can be further enhanced since the branched-off air flow can be brought close to the at least one heat source and can reliably carry away generated heat. Preferably, the guiding portion guides the branched-off air flow such that at least one heat source overlaps the branched-off air flow along and/or perpendicular to a flow direction.

Preferably, the guiding portion comprises a first wall part having a front side exposed to at least part of the branched-off air flow.

Hence, the air can be reliably guided along and/or towards the heat source by the front side of the wall part which may extend along the flow direction of the branched-off air flow. In other words, a front surface may determine the flow direction. Preferably, the first wall part has a wall contact portion at which it contacts with the heat source. So, the first wall part is a heat exchange wall part via which heat can be exchanged between the heat source and the branched-off air flow. In particular, the contact portion is a heat exchange portion.

It is further preferable that at least part of the first wall part is formed by at least part of the heat source.

Thus, the configuration can be further simplified. The branched-off air flow can directly flow along the heat source.

Alternatively or additionally, the first wall part may have an overlapping portion overlapping with the heat source in a direction substantially perpendicular to the direction of the branched-off air flow.

Thus, the heat source can be reliably protected by the first wall part, in particular, the overlapping portion thereof. Also, heat exchange can be performed via the overlapping portion.

In the guiding portion having the first wall part, it is further preferable that the heat source is arranged at least partially at a back side facing away from the front side of the first wall part, in particular, the overlapping portion, further preferably, is attached to a back surface of the front side.

By arranging at least one heat source at a back side which faces away from the front side, an interaction of the branched-off air flow with the heat source can be reduced. That is, the first wall part may be interposed at least partially between the heat source and the branched-off air flow. In other words, the at least one heat source and the at least one wall part may at least partially overlap each other in a direction perpendicular to the flow direction. If the heat source is attached to the back surface, heat exchange may take place via the first wall part and the branched-off air flow over the overlapping portion. In this regard, the heat source may be encapsulated at least partially by the first wall part. Thereby, the heat source can be protected by the first wall part.

According to another aspect, the guiding portion may comprise a channel portion comprising the first wall part and having at least one channel in which at least part of the branched-off air flow is configured to flow and which is at least partially formed by the first wall part. The channel may be additionally formed at least partially by a second wall part arranged to substantially face the first wall part.

Therefore, the flow characteristics can be adjusted by the channel portion to efficiently cool the at least one heat source via the branched-off air flow. The first and second wall parts facing each other may provide a stable air flow therebetween.

According to still another aspect, in a section perpendicular to a center axis of the propulsion unit, and preferably at least in the overlapping portion, the first wall part may be at least partially arranged to extend substantially along a circumferential direction around the center axis of the propulsion unit and/or to extend substantially straight along a direction perpendicular to the center axis.

Thereby, the configuration can be further simplified and heat exchange via the first wall part can be enhanced. In particular, the branched-off air flow can be provided in a circumferential shape allowing stable heat exchange. In addition, the structure can be made robust.

Additionally or alternatively, in a section perpendicular to a center axis of the propulsion unit, and preferably at least in the overlapping portion, the first wall part may have a shape of an arc, preferably, a substantially circular arc, more preferably, being arranged concentrically with respect to the center axis of the propulsion unit.

Thus, manufacturing can be simplified and heat exchange can be enhanced.

Since the first wall part is preferably a relatively thin wall part, the extension direction and the shape can be determined by a center line of the first wall part in the section perpendicular to the center axis of the propulsion unit. Front surface and back surface may be arranged substantially parallel to the center line. However, it is also possible that the aforementioned shapes and extension directions apply to the front surface and/or the back surface.

According to still another aspect, in a section perpendicular to a center axis of the propulsion unit, and preferably at least at the overlapping portion, the channel portion is at least partially arranged to extend substantially along a circumferential direction around the center axis of the propulsion unit.

Thus, the configuration can be made compact and the structure can be made robust. Also, the branched-off air flow can be provided in a circumferential shape allowing stable heat exchange.

The above may also be applied to the second wall part such that they first and second wall part can be made parallel to each other and/or to face each other and/or to be arranged concentrically to each other. In this regard, the first and second wall part may be spaced apart from each other, preferably, in a radial direction with respect to the center axis of the propulsion unit.

Alternatively or additionally, the channel portion, in a section perpendicular to a center axis of the propulsion unit, and preferably at least at the overlapping portion, may have a shape of a ring segment, an entire ring, or a circle segment, preferably, being arranged concentrically with respect to the center axis of the propulsion unit.

This allows for a compact structure while ensuring effective heat exchange as well as stable flow of the branched off air flow.

The extension direction of the channel portion may be determined by a center line of the channel portion, in particular, a center line between the first and second wall part. The shape of the channel portion may be determined by the front surfaces forming the channel portion.

An extension in the circumferential direction, that is, a sector determined by the wall parts and/or channel portion, can be within several degrees, is however, preferably 30° or more, more preferably 60° or more, is even more preferably equal to 360°.

According to still another aspect, a plurality of branch-off portions, in particular, channel portions and/or first wall parts, may be provided, preferably arranged substantially along a circumferential direction around a center axis of the propulsion unit.

Thus, one heat source can be cooled by several branched-off air flows or a plurality of heat sources can be cooled by one branch-off portion, respectively. The plurality of branch-off portions may be arranged spaced away from each other, preferably, in equal intervals. In particular, a plurality of channel portions may be provided this way.

Alternatively or additionally, the channel portion has a plurality of channels, preferably arranged side by side, more preferably, substantially along a circumferential direction around a center axis of the propulsion unit or substantially straight along a direction perpendicular to the center axis.

An extension in the circumferential direction, that is, a sector determined by each of the branch-off portions, channel portions and/or first wall parts, can be within several degrees, is however, preferably 30° or more, more preferably 60° or more, is even more preferably equal to 360°.

Thus, the channel portion may comprise a plurality of channels arranged substantially parallel to each other. Thereby, the channels can be separated by a plurality of separating walls extending substantially along the air flow direction. Thereby, the surface area for heat transfer can further be increased. Also, the structure can be made more robust in terms of mechanical properties. That is, the at least one separating wall can be used to reinforce the structure, in particular, to support the first wall part.

According to still another aspect, the branch-off portion may further comprise a heat exchange surface increasing portion provided on at least part of the front side of the first wall part, preferably of the overlapping portion, and being configured to be exposed to at least part of the branched-off air flow.

By means of the heat exchange surface increasing portion, the cooling efficiency can be further enhanced, as an increased surface area may contact the branched-off air flow. The heat exchange surface increasing portion may comprise an irregular surface shape exposed to the branched-off air flow. In particular, the heat exchange surface increasing portion may protrude into the branched-off air flow. Exemplarily, the heat exchange surface increasing portion comprises at least one, even more preferably, a plurality of at least one of a pin, a fin, and a lattice structure, which are particularly preferably curved in a flow direction of the branched-off air flow.

According to still another aspect, the branch-off portion may further comprise a connecting portion connected to the first wall part, preferably the overlapping portion, and bridging at least part of the branched-off air flow to make heat conductive connection to another wall part exposed to the branched-off air flow and/or air flow other than the branched-off air flow, preferably bridging the channel of the channel portion, more preferably connecting the first and second wall part together across the at least one channel, even more preferably, the connecting portion comprises at least one, particularly preferably, a plurality of at least one of a pin, a fin, and a lattice structure.

Thereby, the connecting portion can also function as a heat exchange surface increasing portion, which can be contacted by the branched-off air flow. In addition, the connecting portion may bridge the branched-off air flow, in particular, the channel such that cooling of the heat source may additionally take place, for example, at the second wall part to which the heat source is not attached, preferably, at a back surface of the second wall part. The second wall part may be exposed to internal air flow other than the branched-off air flow such as the propulsion force generating air flow or external air flow such as free air flow surrounding the propulsion unit. Hence, cooling efficiency can be further enhanced. In addition, the connecting portion allows mechanical support of the first wall part.

According to still another aspect the branch-off portion at least partially, preferably entirely, extends inside of the propulsion force generating air flow path.

According to this aspect, the configuration can be made compact and the aerodynamic drag relevant surface area can be reduced. In particular, at least part of the branch-off portion may be located closer to a center axis of the propulsion unit than the propulsion force generating air flow path. It is also preferable that the at least one heat source is arranged inside of the propulsion force generating air flow path. It is preferable that the branch-off portion extends radially inward, preferably in a continuous manner.

According to still another aspect, the branch-off portion may comprise at least one inlet, preferably located downstream of a rotating unit of the propulsion unit. The branch-off portion may comprise also at least one outlet downstream with respect to the branched-off air flow of the inlet.

The at least one inlet allows air from the propulsion force generating air flow to flow easily into the branch-off portion. If said inlet is located downstream of a rotating unit such as a fan or compressor stage, air can be supplied with sufficient energy, in particular, velocity and speed, to the branch-off portion. The rotating unit in this regard is an air energizing portion. The outlet allows air to pass through the branch-off portion and the guiding portion thereof. Hence, cooling can be carried out by convection.

It is preferable that the pressure at the inlet is higher than the pressure at the outlet. Hence, the branched-off air flow may be accelerated.

The outlet may open to the surroundings of the propulsion unit. However, the outlet may open to the propulsion force generating air flow path. Thus, the branched-off air flow can be used for the generation of propulsion force.

To this end, the propulsion unit may comprise a pressure drop device configured to reduce the pressure within the propulsion force generating air flow path between the inlet and the outlet. For example, the pressure drop device may be a throttle valve or a protruding portion protruding in the propulsion force generating air flow path.

Since preferably the second wall part at a back side thereof is exposed to the propulsion force generating air flow path, it is preferable that the pressure drop device is attached to the second wall part.

Alternatively or additionally, the branch-off portion, preferably, the guiding portion, in particular, the channel portion may comprise a tapered portion, in which the cross-section narrows along the branched-off air flow direction. Preferably, the tapered portion is formed at or downstream of the overlapping portion. In particular, the tapered portion may be formed towards the outlet, more preferably, continuously from a downstream end portion of the overlapping portion in the flow direction to the outlet. Thereby, the flow can be accelerated such that the heat transferred to the air at the overlapping portion is used to accelerate the air flow. Thus, the accelerated air can contribute to the propulsion force which is known as Meredith effect.

Alternatively or additionally, the channel portion may have an expanding portion in which the cross-section widens along the branched-off air flow. The expanding portion may be provided upstream of the overlapping portion. In particular, the expanding portion may be provided towards the overlapping portion, preferably, continuously from the inlet to an upstream end portion of the overlapping portion. Thereby, it can be ensured that sufficient surface area for heat transfer is provided at the overlapping portion.

In particular, the expanding portion may be arranged upstream of the tapered portion.

Each channel may have the aforementioned tapered and expanding portions.

Preferably, the at least one inlet comprises one of a scoop inlet and a NACA inlet.

Thereby, the air flow can be smoothly branched-off by the branch-off portion which enhances the aerodynamic behaviour. It is to be noted that the scoop inlet at least partially protrudes into the propulsion force generating air flow path while the NACA inlet is formed in a recessed manner in said wall part. In particular, the NACA inlet may have a diverging shape along the flow direction wherein the flow is defined in a lateral direction perpendicular to the flow direction by side walls resulting from the continuous recessed shape.

According to still another aspect, the propulsion unit may comprise at least one movable part which is movable between a branch-off state and a reduced branch-off state in which the air flow supplied towards the at least one heat source is reduced, preferably completely suppressed, with respect to the branch-off state, preferably, the at least one movable part is configured to at least partially, preferably entirely, close the branch-off portion.

Thereby, the amount of branched-off air flow can be adjusted, since, in particular, a cross-section of the inlet can be adjusted. That is, the inlet may be closed by the movable part. In situations where cooling is not required, the movable part can be moved to the reduced branch-off state, and the aerodynamic behaviour of the propulsion force generating air flow can be further enhanced.

Alternatively or additionally, in at least the branch-off state, the movable part is configured to protrude into the propulsion force generating air flow path. This is particularly preferably in combination with a scoop inlet. That is, in the branch-off state, the movable part may be configured to define at least part of the scoop inlet, especially, the portion protruding into the propulsion force generating air flow. The movable part may be retracted to close the branch-off portion, when no cooling is required.

According to still another aspect, the at least one heat source may not be directly exposed to the branched-off air flow.

According thereto, noise pollution and aerodynamic disturbances can further be reduced. It is preferable that the heat source is not directly exposed to any kind of internal or external air flow.

According to still another aspect, the at least one heat source comprises or is one of a rotary electric machine such as an electric motor configured to drive a rotating unit, and an electronic component, preferably an ECU, for controlling the propulsion unit.

In an electrically driven propulsion unit, an electric drive unit capable of providing sufficient driving power for a fan or compressor is required. When the driving power is supplied, the electric drive unit generates considerable amount of heat which needs to be removed in order to ensure proper operation. In addition, there may be other components such as an engine control unit (ECU) or other electronic components such as transistors and the like which may not be exposed to excessive heat. Therefore, proper operation of an electrically driven propulsion unit can be ensured.

Alternatively or additionally, in a section perpendicular to a center axis of the propulsion unit, the heat source may have an outer periphery extending at least partially substantially along a circumferential direction around a center axis of the propulsion unit or extending at least partially substantially straight along a direction perpendicular to the center axis of the propulsion unit.

Thereby, the configuration can be made compact. Also, heat exchange may be facilitated and the arrangement of heat source and first wall part and/or channel portion can be matched to each other.

Alternatively or additionally, the heat source may be arranged concentrically with respect to the first wall part.

Thus, the configuration can be made compact and heat exchange can be facilitated.

According to still another aspect, at least part of an outer periphery of the heat source has the shape of an arc, preferably, a substantially circular arc, a circle, a ring segment or a ring, preferably being arranged concentrically with respect to a center axis of the propulsion unit.

In this way, the shape of the heat source can be further simplified and matched to the shape of the first wall part and/or the channel portion.

According to still another aspect, a plurality of heat sources, preferably contact portions contacting with the first wall part thereof, may be arranged substantially along a circumferential direction around a center axis of the propulsion unit.

Thus, a space required by the plurality of heat sources can be kept small. Also, heat exchange can be reliably performed for each of the plurality of heat sources.

An extension in the circumferential direction, that is, a sector determined by the heat source or each heat source, in particular, a contact portion thereof, can be within several degrees, is however, preferably 30° or more, more preferably 60° or more, is even more preferably equal to 360°.

It is preferable that the heat source is in line contact, however, more preferably, in surface contact with the first wall part, in particular, at the overlapping portion thereof.

Thus, the amount of heat exchange can be increased.

Further, the heat source may be at least partially arranged inside of the first wall part with respect to the center axis, preferably inside of the overlapping portion.

Thereby, the configuration can be made compact, and a sufficient surface for heat exchange can be ensured.

In the above, at least the overlapping portion, preferably, the entire first wall part, at least part of the channel portion such as the second wall part, the connecting portion, and/or the heat exchange surface increasing portion may comprise, preferably, may be formed by a material having a thermal conductivity coefficient of at least 80.0 W/(m x K), preferably, at least 120.0 W/(m x K). Such materials may comprise iron, aluminium, magnesium, zinc, copper, and alloys thereof.

Also, at least an outer periphery of the heat source may comprise such material. It is advantageous if the propulsion unit is of a ducted fan type. In this regard, it is preferable if the branch-off portion branches-off an air flow from the propulsion force generating air flow path defined by the duct. Hence, cooling can be reliably carried out.

According to still another aspect, the branch-off portion may comprise a support rotating unit such as a fan configured to energize the branched-off air flow.

Thereby, the branched-off airflow can further be accelerated. In addition, air can be suctioned into the branch-off portion which may further reduce aerodynamic disturbances in the propulsion force generating air flow path.

According to still another aspect, the present invention provides an aerial vehicle, preferably, a vertical-take-off-and-landing aerial vehicle, comprising the propulsion unit according to any of the preceding aspects. Accordingly, an aerial vehicle can be provided in which proper operation of a propulsion unit can be ensured.

Preferably, the aerial vehicle is configured such that a movable part of the propulsion unit which is movable between a branch-off state and a reduced branch-off state in which the air flow supplied towards the at least one heat source is reduced, preferably completely suppressed, with respect to the branch-off state, is moved to the reduced branch-off state during forward flight, such as cruise, of the aerial vehicle and to the branch-off state during hovering and/or substantially vertical flight of the aerial vehicle, even more preferably, the aerial vehicle comprises a link mechanism for moving the movable part between the branch-off state and the reduced branch-off state.

In a vertical-take-off-and-landing aerial vehicle, the propulsion unit may be pivotably attached to a lift body such as an airfoil. During cruise or forward flight, lift is mainly generated by the airfoil. During vertical flight or hovering, the propulsion unit is pivoted such that a thrust axis is substantially aligned with a vertical direction. Hence, the propulsion force provides the lift. In this flight situation, the power output is rather high such that the electric drive unit generates a rather high amount of heat. The above-mentioned movable part can be brought into the branch-off state to ensure cooling. The link mechanism may be configured such that it has one portion coupled to the lift body of the aerial vehicle and another portion coupled to the propulsion unit. Hence, for example, by means of a mechanical coupling, the relative movement of the propulsion unit may be transferred into a movement of the movable part.

Another aspect of the present invention provides a control method for a propulsion unit, comprising the step of controlling the movable part to be moved to the reduced branch-off state during cruise of the aerial vehicle and to the branch-off state during hovering and/or substantially vertical flight of the aerial vehicle and/or controlling the movable part to be moved between the branch-off state and the reduced branch-off state depending on a power output state of the propulsion unit, preferably controlling the movable part to the branch-off state when a power output threshold is exceeded.

According to this aspect, the movable part can be controlled such that cooling is efficiently carried out when required while a smooth propulsion force generating air flow can be ensured when cooling is not required.

Still another aspect of the present invention provides a control unit configured to perform the aforementioned method on the propulsion unit. In this regard, it is to be noted that the propulsion unit may comprise an actuator device coupled to the movable part which is preferably controllable by the control unit.

Also, the present invention provides a programme which is configured to perform the aforementioned control method when running on a computer.

In addition, a computer readable storage medium on which the aforementioned programme is stored may be provided.

It is to be noted that the present invention also considers an operation method of a propulsion unit, wherein the at least one heat source is cooled via an air flow supplied by an air flow branched-off from the propulsion force generating air flow path.

In particular, the heat source may be cooled so that at least 60 %, preferably at least 70 %, even more preferably at least 80 %, in particular, substantially 100 % of the generated heat is transferred to the branched-off air flow.

The above aspects will now be further specified by means of the following detailed embodiments making reference to the appended drawings.
Fig. 1 shows a part of an aerial vehicle in a section along a front-rear direction and up-down direction of the aerial vehicle considered in an upright orientation.
Fig. 2 is a detailed view of the branch-off portion of Fig. 1.
Fig. 3 shows a modification of the inlet of the branch-off portion.
Fig. 4 shows a further modification of the branch-off portion.
Fig. 5 shows a further modification of part of the propulsion unit, in particular, the branch-off portion thereof.
Fig. 6 shows a further modification of the branch-off portion.
Fig. 7 shows a further modification with a plurality of branch-off portions.

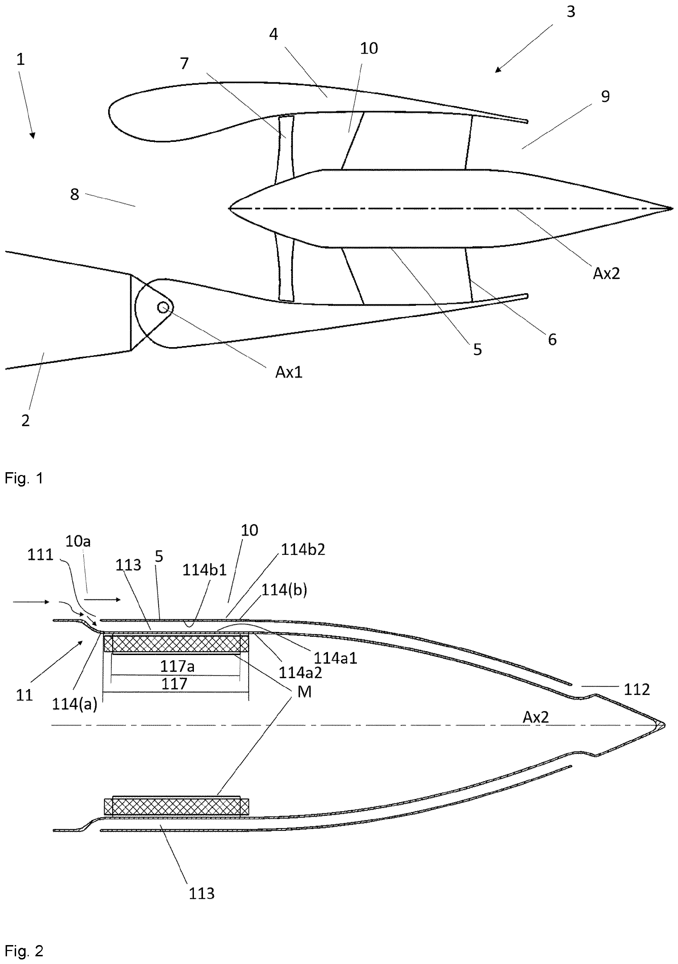

Fig. 1 shows a part of an aerial vehicle 1 in a section along a front-rear direction and up-down direction of the aerial vehicle considered in an upright orientation. The aerial vehicle 1 comprises a lift body 2 such as an airfoil. The aerial vehicle 1 further comprises a propulsion unit 3 which is attached to a rear portion of the lift body 2 in the front-rear direction.

The propulsion unit 3 is attached such as to be pivotable around an axis Ax1. The axis Ax1 extends substantially along a left-right direction of the aerial vehicle which is a horizontal direction.

The propulsion unit 3 has a center axis Ax2 extending in the front-rear direction in the state shown in Fig. 1. That is, in Fig. 1 the directions of the propulsion unit 3 and the aerial vehicle 1 correspond to each other. The center axis Ax2 extends substantially parallel to a direction, particularly aligns with an axis of a propulsion force. The propulsion unit 3 comprises an outer cowling 4 surrounding the center axis Ax2. In addition, the propulsion unit 3 comprises an inner casing 5 arranged inside of the outer cowling 4. The inner casing 5 is accommodated by the outer cowling 4 and is attached thereto by means of struts 6. The inner casing 5 substantially surrounds the center axis Ax2. It is to be noted that instead of struts, also aerodynamically active components may be used to support the inner casing 5 such as vanes, particularly, guide vanes, or static blades.

The inner casing 5 accommodates a drive unit such as an electric motor M therein (shown in Fig. 2).

The electric motor M has an output shaft extending substantially along the axis Ax2 coupled to a rotating unit 7 such as a fan. The fan 7 suctions air from the surroundings of the propulsion unit 3 into an inlet 8 on a front side of the propulsion unit 3 and accelerates the suctioned air. The accelerated air is exhausted from an outlet 9 towards the surroundings at the rear side of the propulsion unit 3, thereby generating a propulsion force. An axis of the rotating unit 7 aligns with the center axis Ax2. Part of the rotating unit 7 is located between the outer cowling 4 and the inner casing 5 in a direction perpendicular to the center axis 2. The electric motor M is preferably arranged rearward of the rotating unit 7 which is an air energizing portion.

The propulsion unit 3 is of a ducted fan type. That is, the air accelerated by the rotating unit 7 passes a duct 10 on a downstream side (rear side) of the rotating unit 7. In particular, the duct 10 is formed by the outer cowling 4 and the inner casing 5 arranged inside of the outer cowling 4. The duct 10 is an example of a propulsion force generating air flow path. In operation, air flows along the propulsion force generating airflow path. The air accelerated in in the duct 10 generates a main component of the propulsion force.

Fig. 2 is a detailed view of the branch-off portion 11.

As can be seen from Fig. 2, the propulsion unit 3 further has a branch-off portion 11,omitted in Fig. 1 for the sake of graphic representation, configured to branch-off part of the air flowing through the duct 10 from the inlet 8 to the outlet 9. The branch-off portion 11 has an inlet 111 located on the rear side, that is, downstream along the propulsion force generating air flow direction of the rotating unit 7. On the rear side of the inlet 111, in particular, downstream along a branched-off air flow direction, an outlet 112 is provided via which the branched-off air is exhausted towards the surroundings.

As can be seen from said Fig. 2, wherein the outer cowling 4 is omitted, the duct 10 has a branch portion 10a. At the branch portion 10a, the propulsion force generating airflow is separated. As indicated by the arrows, part of the propulsion force generating air flow follows the propulsion force generating air flow path towards the outlet 9. Part of the propulsion force generating air flow flows into the branch-off portion 11 via the inlet 111 thereof towards the outlet 112.

At least part of the branch-off portion 11 extends radially inward towards the center axis Ax2. The branch-off portion 11 has a guiding portion 113 which guides the branched-off air along the electric motor M. In particular, the guiding portion 113 comprises a channel portion 114 having two wall parts 114a and 114b which respectively guide the branched-off air flow. The branched-off airflows along respective front surfaces 114a1 and 114b1 of the two wall parts. It is to be noted that wall part 114a is an example of a first wall part and wall part 114b is an example of a second wall part. The flow direction is defined by tangents on these respective front surfaces 114a1 and 114b1. The front surfaces 114a1 and 114b1 preferably extend substantially parallel to each other and at least partially inward from the duct 10. It should be noted that the two wall parts 114a and 114b can be two separate elements or part of the same component. In particular, the two wall parts 114a and 114 may be part of the inner casing 5. The two wall parts 114a and 114b are spaced away from each other in a radial direction.

The channel portion 114 comprises at least one channel defined by wall parts 114a and 114b defining the channel therebetween through which the branched-off air may flow. The channel is preferably completely and continuously surrounded by wall parts along and with respect to the air flow direction. However, the channel need not be surrounded by wall parts along its entire periphery. A channel may be formed by two wall parts having surface normals with a component facing each other. The wall parts 114a and 114b, in particular, their front surfaces substantially face each other along a radial direction with respect to the center axis Ax2.

On a back side, that is on a side located along the direction of a surface normal to the surface 114a1 and perpendicular to the flow direction of the branched-off air flow, the electric motor M is arranged. In particular, the electric motor M is attached to the back side, especially a back surface 114a2 of the wall part 114a. The electric motor M is attached to the back surface 114a2 in a heat conductive manner. That is, the materials used for attachment are not heat insulating, preferably comprising a metal, more preferably, at least one of steel, aluminium, zinc, magnesium, and copper, and alloys thereof, or comprise fiber reinforced plastics, preferably carbon fiber reinforced plastics.

In Fig. 2, only the stator of the electric motor M is shown. As can be seen in Fig. 2, the first wall part 114a has an overlapping portion 117 which overlaps with the electric motor M along a direction perpendicular to the air flow direction of the branched-off air flow. The overlapping portion is also a portion of the wall part 114a overlapping with the stator in a direction perpendicular to the center axis Ax2. The overlapping portion is defined by the outer periphery of the electric motor M, in particular, of the stator. The overlapping portion 117 extends substantially parallel to the center axis Ax2. The stator is attached to the back surface 114a2 at the overlapping portion. The stator has a contact portion, which is here the entire outer surface contacting with the first wall part 114a. The overlapping portion 117 includes a contact overlapping portion 117a at which contact is provided between the first wall part 114a and the electric motor M. The contact overlapping portion is defined by said outer periphery (outline) of the contact portion. It is to be noted that, preferably, the overlapping portion 117 extends substantially parallel to the center axis Ax2.

Even though not recognizable from Fig. 2, a cross-section of the the channel portion 114 and the channel formed by the wall parts 114a and 114b may have a substantially parallelogram shape, that is the surfaces 114a1 and 114b1 may have a substantially planar shape, in particular, along a direction perpendicular to the flow direction, in particular, along a lateral direction of the channel. However, preferably, the surfaces 114a1 and 114b1 may also have a curved arc shape such that the cross-section perpendicular to the center axis Ax2 corresponds to a ring segment shape. The channel is not only defined by the two wall parts 114a and 114b at respective ends in the radial direction (height direction) but also from two wall parts at respective lateral ends thereof. Hence, the channel is completely surrounded by wall parts. The extension of the channel portion 114 in the lateral direction may be larger than in a height direction. Thereby, a large surface area for cooling can be ensured, while an extension in a height direction of the channel can be maintained small.

The wall parts 114a and 114b and the respective front and back surfaces thereof are arranged to extend substantially along a circumferential direction around the center axis Ax2. In particular, at least in the overlapping portion 117 or at least in the contact overlapping portion 117a, the first wall part 114a has a circular arc shape. The center of the circle can be aligned with the center axis Ax2. Also, projecting the overlapping portion 117 to the second wall part 114b along the direction perpendicular to the flow direction of the branched-off air flow and/or the direction perpendicular to the center axis Ax2, the second wall part 114b has a circular arc shape in the projected overlapping portion. As a result, the channel portion 114 has the overlapping portion 117 and has a ring segment shape at least at a portion corresponding to the overlapping portion.

The stator of the electric motor M has an outer periphery extending along the circumferential direction. As seen in Fig. 2, the stator is arranged concentrically with respect to the first wall part 114a and the channel portion 114. Further, the electric motor M makes direct surface contact at the contact overlapping portion 117a with the first wall part 114a.

A back surface 114b2 of the wall part 114b is in contact with the propulsion force generating air flow. That is, the back surface forms part of the duct 10.

Operation and effects of the first embodiment are described in the following.

The electrically driven propulsion unit 3 has the branch-off portion 11 which is configured to branch-off part of the air flow flowing along the duct 10 and is configured such that the electric Motor M is cooled via an air flow supplied by the branch-off portion 11.

Hence, an air flow for generating a propulsion force of the propulsion unit 3 is used for cooling of the at least one heat source. Therefore, other cooling mediums such as water of phase changing mediums need not be provided. Rather, for cooling it can be resorted to an airflow which is generated anyway in order to create the propulsion force. Therefore, complexity of the cooling configuration and the entire propulsion unit can be reduced.

By supplying the branched-off air flow to the electric motor M, a direct interaction of the electric motor M with the propulsion force generating air flow can be avoided. Hence, noise and aerodynamic drawbacks due to aerodynamic forces such as drag can be reduced.

The duct 10 is an air flow path traversed by air due to rotation of a rotating unit 7 such as a fan or compressor. Hence, energized air can be used for cooling.

The branch-off portion 11 comprises the guiding portion 113 configured to guide at least part of the branched-off air flow along the at least one heat source.

For that reason, the cooling efficiency can be further enhanced since the branched-off air flow can be brought close to the at least one heat source and reliably carry away generated heat. The guiding portion 113 guides the branched-off air flow such that the electric motor overlaps the branched-off air flow perpendicular to the branched-off air flow direction.

In particular, as can be seen from Fig. 2, the electric motor M overlaps the wall part 114a, along which the air flows, at the overlapping portion 117, in the height direction of the channel which is a direction perpendicular to the air flow and parallel to a surface normal direction of the surface 114a1. The channel is arranged to overlap with the heat source along the height direction of the channel.

The guiding portion comprises the wall part 114a having a front side, the side of the front surface 114a1, exposed to at least part of the branched-off air flow.

Hence, the air can be reliably guided by the front side (front surface) of the wall part which may extend along the flow direction of the branched-off air flow. In other words, the front surface determines the flow direction.

The electric motor M is arranged at the back side facing away from the front side of the at least one wall part 114a, particularly, is attached to a back surface 114a2 of the front side.

In addition, the electric motor M is encapsulated by the inner casing 5 from which the wall part 114a is a part. Hence, the motor M is encapsulated at least partially by the at least one wall part 114a.

By arranging the electric motor M at a back side which faces away from the front side and encapsulating the electric motor M by at least part of the wall part 114a, an interaction of the branched-off air flow with the electric motor can be reduced. That is, the wall part 114a is interposed at least partially between the electric motor M and the branched-off air flow. Since the motor M is attached to the back surface 114a2 at the overlapping portion 117, heat conduction may take place via the wall part 114a and the branched-off airflow. Thus, the wall part 114a serves as a heat exchange wall part. The electric motor M contacts directly with the back surface 114a2 at the contact overlapping portion 117a. The electric motor M may contact the wall part 114a at a plurality of locations thereof along the circumferential direction.

The guiding portion 113 comprises the channel portion 114 in which at least part of the branched-off air flows, which is formed by the two wall parts 114a and 114b, in particular, the surfaces 114a1 and 114b1, arranged at least in sections to face each other.

Therefore, the flow characteristics can be adjusted by the channel portion 114 to efficiently cool the at least one heat source M via the branched-off air flow.

As specified above, in a section perpendicular to the center axis Ax2, and at least in the overlapping portion 117, the first wall part 114a is arranged to extend substantially along a circumferential direction around the center axis Ax2.

Thereby, the configuration can be simplified and heat exchange via the first wall part 114a can be enhanced. In particular, the branched-off air flow can be provided in a circumferential shape allowing stable heat exchange. In addition, the structure can be made robust.

Also, in the section perpendicular to the center axis Ax2 of the propulsion unit, and at least in the overlapping portion 117, the first wall part 114a has a shape of a substantially circular arc being arranged concentrically with respect to the center axis Ax2.

Thus, manufacturing can be simplified and heat exchange can be enhanced.

The first wall part 114a and the second wall part 114b are preferably relatively thin wall parts of several millimetres and not more than 10 cm. Thus, the extension direction and the shape can be determined by a center line of the first wall part 114a in the section perpendicular to the center axis Ax2.

Also, in a section perpendicular to the center axis Ax2, and at least at the overlapping portion 117, the channel portion 114 is arranged to extend substantially along a circumferential direction around the center axis Ax2.

Thus, the configuration can be made compact and the structure can be made robust. Also, the branched-off air flow can be provided in a circumferential shape allowing stable heat exchange.

The channel portion 114, in a section perpendicular to the center axis Ax2, and at least at the overlapping portion 117, has a shape of a ring segment being arranged concentrically with respect to the center axis of the propulsion unit.

This allows for a compact structure while ensuring effective heat exchange as well as stable flow of the branched off air flow.

The extension direction of the channel portion may be determined by a center line of the channel portion, in particular, a center line between the first and second wall part. The shape of the channel portion may be determined by the front surfaces forming the channel portion.

An extension in the circumferential direction of the first wall part can be 360° such that the first wall part has a shape of an entirely closed circular arc. Similarly, the channel portion 114 may have the shape of entirely closed ring extending 360° around the center axis Ax2.

The branch-off portion entirely extends inside of the duct 10 and at least partially extends radially inward towards the center axis Ax2.

Thus, the configuration can be made compact and the aerodynamic drag relevant surface area can be reduced. In particular, at least part of the branch-off portion may be located closer to the axis Ax2 of the propulsion unit 3 than the duct 7. Also, the electric motor M is arranged inside of the duct 10.

The branch-off portion 11 comprises the inlet 111 which is located downstream of the rotating unit 7. The branch-off portion 11 also comprises the outlet 112 downstream of the inlet 111 with respect to the branched-off air flow.

The at least one inlet 111 allows air from the duct 10 to flow easily into the branch-off portion 11. The outlet 112 allows air to pass through the branch-off portion 11 and the guiding portion 112 thereof. Hence, cooling can be carried out by convection.

Preferably, the pressure at the inlet is higher than the pressure at the outlet. Hence, the branched-off air flow may be accelerated.

Although not shown, the branch-off portion 11, especially, the channel portion 114 may comprise a tapered portion, in which the cross-section narrows along the branched-off airflow direction from the inlet 111 towards the outlet 112. That is, the wall parts 114a and 114b may extend to be narrower to each other. Preferably, the tapered portion is formed downstream of the overlapping portion 117. Thereby, the branched-off airflow can be accelerated after being heated by the heat source and this air flow can be used for generating the propulsion force.

Also, the branch-off portion 111, in particular, the channel portion 114 may have an expanding portion in which the cross-section of the channel and/or the channel portion 114 is widened, preferably towards the overlapping portion. Thus, sufficient surface area for heat exchange can be provided at the overlapping portion.

The outlet 112 is arranged to open into a free air flow at the surroundings of the propulsion unit 3. The branched-off air flow can be used to support generation of the propulsion force.

The inlet 111 is a NACA inlet.

Thereby, the air flow can be smoothly branched-off by the branch-off portion which enhances the aerodynamic behaviour. The NACA inlet 111 is formed in a recessed manner in the duct 10, as can be taken from Fig. 2. In particular, the NACA inlet 111 may have a diverging shape along the flow direction wherein the flow is defined in a lateral direction perpendicular to the flow direction by side walls resulting from the continuous recessed shape.

Since the electric motor M is accommodated in the inner casing 5 and surrounded at least partially by the wall part 114a, the electric motor M is not directly exposed to the branched-off air flow and is not directly exposed to any kind of internal or external air flow.

According thereto, noise pollution and aerodynamic disturbances can be further reduced.

In the electrically driven propulsion unit 3, the electric drive unit M capable of providing sufficient driving power for a fan or compressor is required. When the driving power is supplied, the electric drive unit M generates considerable amount of heat which needs to be removed in order to ensure proper operation.

In a section perpendicular to the center axis Ax2, the electric motor M has an outer periphery extending substantially along a circumferential direction around the center axis Ax2.

Thereby, the configuration can be made compact. Also, heat exchange may be facilitated and the arrangement of the electric motor M and first wall part 114a and/or the channel portion 114 can be matched to each other.

Also, the electric motor M is arranged concentrically with respect to the first wall part 114 and the center axis Ax2. In particular, a rotor rotating inside the stator is aligned with the center axis Ax2.

Thus, the configuration can be made compact and heat exchange can be facilitated.

At least part of the outer periphery of the stator has the shape of a circular arc being arranged concentrically with respect to the center axis Ax2 and/or the first wall part 114a.

In this way, the shape of the heat source can be further simplified and matched to the shape of the first wall part 114a and/or the channel portion 114.

At the contact overlapping portion 117a, surface contact of the electric motor M with the first wall part 114a is made.

Thus, the amount of heat exchange can be increased.

Further, the electric motor M is entirely arranged inside of the first wall part 114a with respect to the center axis Ax2, that is at any section perpendicular to the center axis Ax2. Specifically, the motor M is arranged inside of the overlapping portion.

Thereby, the configuration can be made compact, and a sufficient surface for heat exchange can be ensured.

In the above, at least the overlapping portion 117, preferably, the entire first wall part 114a, and at least part of the channel portion 114 such as the second wall part 114b are formed by a material having a thermal conductivity coefficient of at least 80.0 W/(m x K), preferably, at least 120.0 W/(m x K). Such materials may comprise iron, aluminium, magnesium, zinc, copper, and alloys thereof.

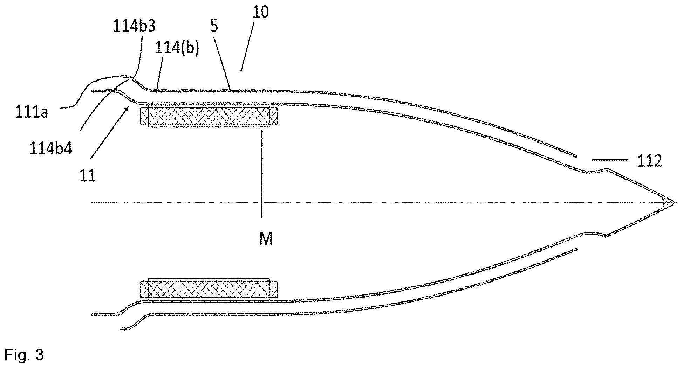

Fig. 3 shows a modification of the above embodiment.

While in the first embodiment the inlet 111 is a NACA inlet, Fig. 3 shows an embodiment in which a scoop inlet 111a is provided.

The scoop inlet 111a at least partially protrudes into the duct 10. The inner casing 5 defining part of the duct 10 has a protruding portion 114b3 preferably continuous to the wall part 114b and protruding into the duct 10 from a non-protruding portion.

Preferably, the protruding portion 114b3 has a curved portion on a distal side from the non-protruding portion when seen in a direction along the propulsion force generating air. In particular, an inner periphery exposed to the branched-off air flow, and outer periphery exposed to the propulsion force generating air flow, of the curved portion are curved.

The protruding portion 114b3 has not only a curved portion when seen in the direction along the propulsion force generating air flow but also a curved portion 114b4 when seen in a section along the propulsion force generating airflow direction, that is, when seen from a direction perpendicular to the propulsion force generating air flow direction as in Fig. 3. Preferably, the inner surface of the curved portion which is continuous with the surface 114b1 and the outer surface which is continuous with the surface 114b2 is curved. They are curved against the direction of the propulsion force generating air flow.

Accordingly, part of the propulsion force generating air flow can be reliably branched into the branch-off portion 11. Further, in view of the curved portion 114b4, the branched-off flow can be smoothly guided towards the guiding portion and the outlet 112.

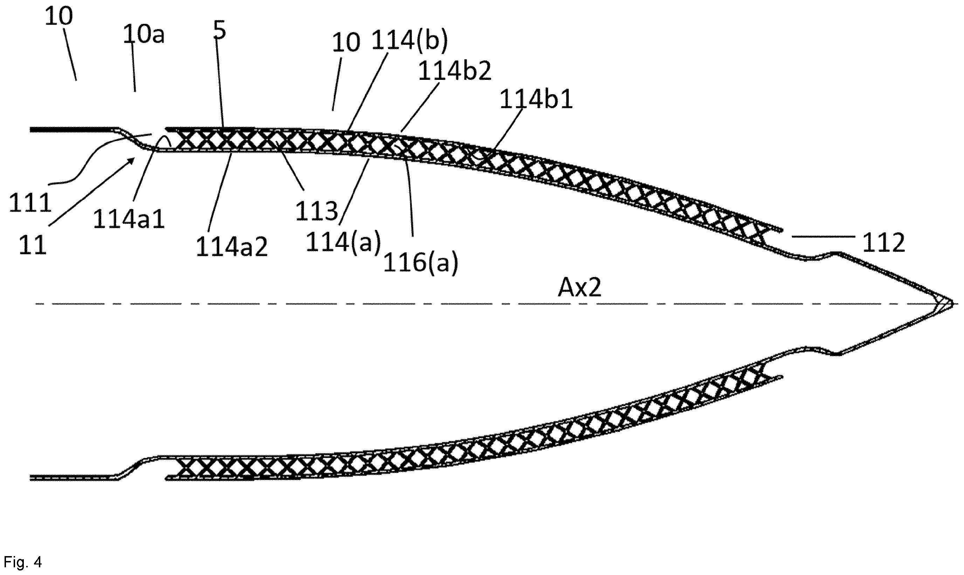

Fig. 4 shows a further modification of the first embodiment.

In this modification, the branch-off portion 11 comprises a connecting portion 116. The connecting portion 116 bridges at least one channel of the channel portion 114. In Fig. 4, the branch-off portion 11 comprises a plurality of lattice structures 116a arranged along the branched-off airflow direction and/or the lateral direction of the channel. A lattice structure 116a comprises at least one cross portion with at least one crossing point at which at least two connecting elements such as pins cross each other and preferably contact each other. It should be noted that the connecting elements need not form a lattice structure but can be individual pins, for example.

The lattice structures 116a are connected and contacting at at least one location to the wall part 114a and at another location to the wall part 114b, in particular to the respective front surfaces thereof. Preferably, each connecting element contacts at respective end portions thereof with the wall parts 114a and 114b. It is to be noted that, even though a heat source is not shown in Fig. 4, the connecting portion 116 and, thus, the connecting elements are preferably provided at the overlapping portion of the first wall part 114a.

Hence, the connecting portion 116 at least partially (at least a lattice structure) overlaps with the heat source in the height direction of the channel. In particular, at least one connection location of the connecting element with one of the wall parts 114a and 114b, preferably, both connecting locations at the respective ends, more preferably, a plurality of connection locations of the connecting portion, overlap along the height direction with the heat source.

The material of the connecting portion preferably comprises one of the aforementioned material selection.

The connecting portion 116 has the function of surface increase for heat exchange such that the branched-off air flow contacts with an increased surface area in the channel portion. In addition, the connecting portion 116 bridges the branched-off air flow, in particular, the channel of the channel portion 114, such that cooling of the heat source may additionally take place at the front side of the other wall part 114b, and preferably additionally at a back side, more preferably at the back surface 114b2 of the wall part 114b to which the heat source is not attached.

Also, the connecting portion 116 supports the first wall part 114a. Thus, the structure can be reinforced and made more robust. In this regard, it is to be mentioned that the connecting portion 116 extends substantially over the entire extension length of the channel portion along the branched-off air flow direction. At least, the connecting portion 116 is provided at a portion downstream of the overlapping portion, preferably, extends from a portion upstream of the overlapping portion to a portion downstream of the overlapping portion. Thereby, mechanical strength can be ensured. That is, the motor M attached to the first wall part 114a may have considerable weight and exert massive loads during operation. By means of the connecting portion the motor M can be supported at the second wall part 114b.

In general, it is preferable that at least one, preferably, both of the first and second wall parts are supported by the outer cowling 5 by means of support portions such as the struts 6 to provide sufficient support. In particular, a support portion can be provided between the inlet 111 of the branch-off portion 11 and the outlet 9 of the duct 10. Alternatively or additionally, a support portion may be provided upstream of the inlet 111.

That is, as it has already been presented above, the back surface 114b2 defines part of the duct 10. Hence, the back side, preferably, the back surface 114b2 is preferably exposed to the duct 10 or to a free air stream, even more preferably in a range overlapping with the connecting portion 116 and/or the heat source M along the height direction. Hence, cooling efficiency can be further enhanced.

Not only the wall part 114a, in particular, the front surface 114a1 thereof is cooled via convection of the branched-off air flow but also the wall part 114b and its front surface 114b1 are used for cooling by the branched-off air flow. Additionally, the back surface 114b2 is used for cooling by the propulsion force generating air flow.

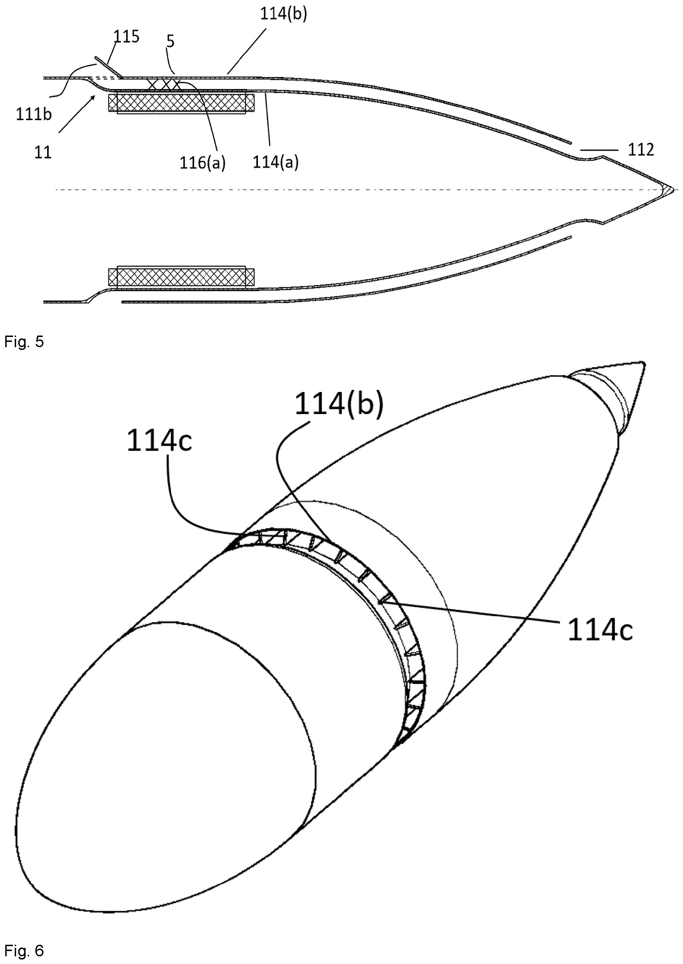

Fig. 5 shows a further modification of the embodiments of Fig. 3 and Fig. 4.

An inlet 111b in Fig. 5 is designed to have a movable part 115. Even though not shown, the protruding portion 114b3 of Fig. 3 can be made movable between a protruding position in which the inlet 111b is opened, and allows air to be branched-off and a retracted position shown in dotted lines, in which the branch-off portion is closed.

In the retracted position, the movable part 115 abuts on a wall part of the branch-off portion, preferably continuous with the wall part 114a, and thereby blocks an air flow into the branch-off portion 11. In particular, the movable part 115 may abut on the wall part 114a in order to close at least part of the channel portion.

Hence, the propulsion unit 3 comprises at least one movable part 115which is movable between a branch-off state corresponding to the protruding position and a reduced branch-off state corresponding to the retracted position in which the air flow supplied towards the at least one heat source, that is, the airflow in the branch-off portion, is reduced, preferably completely suppressed, with respect to the branch-off state. In particular, the at least one movable part 115 is configured to at least partially, preferably entirely, close the branch-off portion 11.

Thereby, the amount of branched-off air flow can be adjusted since, in particular, a cross-section of the inlet 111b can be adjusted. That is, the inlet 111b may be closed by the movable part 115. In situations where cooling is not required or rather low degree of cooling is required, the movable part 114b3 can be moved to the reduced branch-off state, and the aerodynamic behaviour of the propulsion force generating air flow can be further enhanced. It is to be noted that even in this state cooling may take place as the branch-off portion has the connecting portion 116 which bridges the channel. Hence, heat can be transferred to a back side of the wall part 114b which is exposed to the propulsion force generating air flow.

The actuation of the movable part may take place via a link mechanism or an actuator device, preferably an electric actuator device or hydraulic actuator device. The link mechanism may be configured such that it has one portion coupled to the lift body of the aerial vehicle and another portion coupled to the propulsion unit. Hence, for example, by means of a mechanical coupling, the relative movement of the propulsion unit may be transferred into a movement of the movable part.

The movable part is not limited to the aforementioned embodiment. The movable part may be a part different from the protruding portion. For example, it can be a shutter configured to close the NACA or scoop inlet. In the latter case, the protruding portion may be fixed.

If as in Fig. 1, the aerial vehicle is configured as a vertical-take-off-and-landing vehicle, the movable part is preferably moved to the reduced branch-off state during forward flight such as cruise of the aerial vehicle and to the branch-off state during hovering and/or substantially vertical flight of the aerial vehicle.

In a vertical-take-off-and-landing aerial vehicle, the propulsion unit is pivotably attached to a lift body such as an airfoil. During cruise or forward flight, lift is mainly generated by the airfoil. During vertical flight or hovering, the propulsion unit is pivoted such that a thrust axis is substantially aligned with a vertical direction. Hence, the propulsion force provides the lift. In this flight situation, the power output is rather high such that the electric drive unit generates a rather high amount of heat.

Fig. 6 shows a further modification of the first embodiment.

In Fig. 6, the channel portion 114 comprises a plurality of channels arranged to be aligned along a circumferential direction around a center axis of the propulsion unit. It should be noted that Fig. 6 only shows wall part 114b of the channel portion 114 for the sake of better illustration.

The channels are separated by a plurality of separating walls 114c each extending substantially along the branched-off air flow direction. The separating walls 114c are preferably arranged along the lateral direction, that is, along the circumferential direction. Preferably, the separating walls 114c are provided equally spaced such that the cross-section of each channel is substantially the same and the channels are equally spaced in the circumferential direction.

According to this modification, the channel portion 114 has a plurality of channels arranged side by side. These channels are arranged substantially along a circumferential direction around a center axis of the propulsion unit or substantially straight along a direction perpendicular to the center axis. Here, the channel portion 114, as well as the second wall part 114b (and the first wall part 114a (not shown)) each are formed to extend 360° around the center axis. That, is the channel portion has the shape of an entirely closed ring. However, the degree of extension may be lower than 360° such that only a ring segment is formed by the channel portion 114. The same applies to the first and second wall parts 114a and 114b which each form a closed circular arc, but may form an arc segment in a range lower than 360°.

The separating walls 114c may be movable. For example, the separating walls 114c may be movable to change their inclination with respect to the branched-off air flow direction or with respect to the height direction.

Hence, similar to the movable part described in the foregoing embodiment, the separating walls are a movable part configured to modify a flow path, in particular, a cross-section of the branched-off air flow.

Thereby, the surface area for heat transfer can further be increased.

It is to be noted that the plurality of channels may also be arranged parallel to each other.

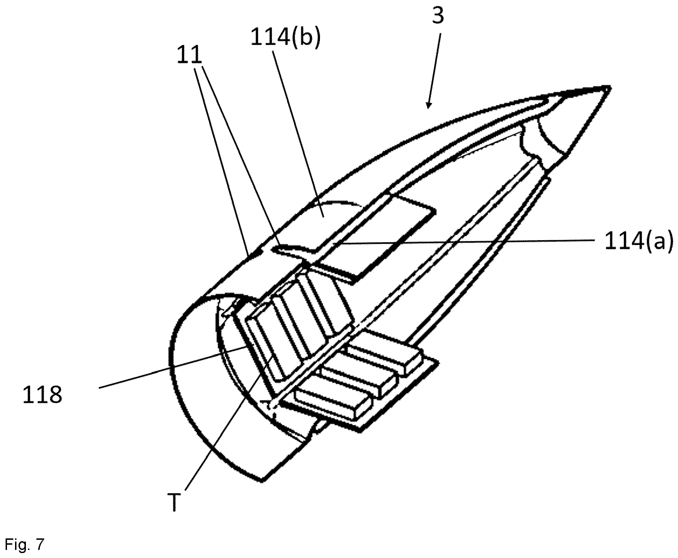

Fig. 7 shows a further modification.

In Fig. 7, a plurality of branch-off portions 11 are provided. The branch-off portions 11 are arranged substantially along a circumferential direction around a center axis of the propulsion unit 3. The branch-off portions 11 are equally spaced along the circumferential direction and preferably have the same shape.

As can be seen from Fig. 7, each branch-off portion 11 has a first wall part 114a and a second wall part 114b facing the first wall part 114a thereby forming a channel portion 114. The first wall part 114a extends substantially straight in a direction perpendicular to the center axis in a section perpendicular to the center axis. The second wall part 114b extends along the circumferential direction in a circular arc shape. Thus, the channel portion 114 has the shape of a circle segment formed by the second wall part 114b and the first wall part 114a, in a section perpendicular to the center axis.

Fig. 7 further shows a plurality of heat sources which comprise transistors T such as MOSFETs. A plurality of (three, in the embodiment) transistors T are aligned along the center axis direction and the direction of the branched-off air flow, respectively, and form a set of transistors T. Each set of transistors can be considered as a heat source having a collecting plate 118 in order to collect heat. The collecting plate may be a printed circuit board, for example.

A plurality of sets of transistors T is provided. The sets are arranged along the circumferential direction around the center axis of the propulsion unit 3 in equal intervals. The number of sets corresponds to the number of branch-off portions.

The collecting plate 118 extends substantially straight in a section perpendicular to the center axis such that it is arranged parallel to the first wall part 114a. Thus, the arrangement of the first wall part 114a and the set of transistors can be matched to each other. In particular, the first wall part 114a and the set of transistors can make surface contact at the outer surface of the collecting plate 118. It is to be noted that the wall part 114a has an overlapping portion defined by the contact portion.

Since a plurality of branch-off portions 11 are provided, the plurality of heat sources can be cooled by one branch-off portion, respectively.

In a section perpendicular to the center axis, the heat source has an outer periphery (the outer surface of the collecting plate 118 being the contact portion) extending substantially straight along a direction perpendicular to the center axis of the propulsion unit.

Thereby, the configuration can be made compact. Also, heat exchange may be facilitated and the arrangement of heat source and first wall part and/or channel portion can be matched to each other.

Further, a plurality of heat sources is arranged substantially along a circumferential direction around a center axis of the propulsion unit. In particular, contact portions of the heat sources are arranged substantially along a circumferential direction around the center axis in a setion perpendicular to the center axis to be concentrically arranged with the plurality of first wall parts 114a.

In Fig. 7, exemplarily, six sets of transistors (heat sources) can be arranged along the circumference. That is, an extension in the circumferential direction of each heat source is 60°.

Thus, a space required by the plurality of heat sources can be kept small. Also, heat exchange can be reliably performed for each of the plurality of heat sources.

Also, surface contact of the heat source with the first wall part 114a, in particular, at the overlapping portion thereof is provided.

Thus, the amount of heat exchange can be increased.

Further modifications will be described in the following.

While in the first embodiment, the outlet 112 is arranged to exhaust into the surroundings, the outlet 112 may also be arranged to exhaust into the propulsion force generating air flow.

Even though not shown, the branch-off portion 11 may comprise a heat exchange surface increasing portion formed different from the connecting portion serving as the heat exchange surface increasing portion. For example, the connecting elements of Fig. 4 can be shortened such that they do not contact the second wall part 114b. Hence, they only protrude into the channel. Thereby, an irregular surface shape is provided at least partially on the first side of the wall part 114a. The heat exchange surface increasing portion may comprise any type of inclination and/or curvature changing shapes, such as protrusions and/or recesses, provided on at least part of the front side of the first wall part 114a, specifically the overlapping portion thereof, and configured to be exposed to at least part of the branched-off air flow.

By means of the heat exchange surface increasing portion, the cooling efficiency can be further enhanced, as an increased surface area may contact the branched-off air flow.

The guiding portion need not guide the air flow along the heat source. It is also possible to provide a hole portion in the duct 10 through which the branched-off air is blown towards the heat source.

Also, in the branch-off portion, a support rotating unit such as a fan may be arranged to energize the branched-off air flow.

The extension of the branch-off portion, in particular, the channel thereof, in the lateral direction which may be a circumferential direction around the center axis Ax2 is not particularly limited.

The shape of the channels and channel portions is not limited to the above-mentioned. Also, a circular channel cross-section can be provided. For this purpose, for example, a bore can be provided into the inner casing 5. Then, parts of the periphery of the bore can configure the wall parts of the present invention.

Further, the propulsion unit may comprise a pressure drop device configured to reduce the pressure within the propulsion force generating air flow path 10 between the inlet and the outlet of the branch-off portion 11. For example, the pressure drop device may be a throttle valve or a protruding portion such as a plate protruding in the propulsion force generating air flow path 10. The pressure drop device may be attached to the second wall part 114b at a back side thereof.

In the above embodiments, the wall part 114a has been interposed between the heat source and the branched-off air flow. However, the first wall part 114a may be formed at least partially by an outer periphery of the heat source. For example, the outer surface of the collecting plate 118 may form the first wall part. To this end, for example, the overlapping portion may be replaced by the heat source which may be fixed to the surroundings of the first wall part by, for example, screwing. Alternatively the connecting portion 116 may support the heat source. Thereby, heat exchange can be further enhanced. It is to be noted that the outer periphery of the heat source is preferably flush with the surroundings of the first wall part to form a stable branched-off air flow.

Further, an ECU may be a heat source to be cooled. For example, in Fig. 7, one of the sets of transistors T can be replaced by an ECU.

The features of the aforementioned embodiments can be freely combined with each other.

In the present disclosure, "at least" also comprises the respective entirety and can also mean only the specified quantity unless otherwise specified.

## Claims

1. An electrically driven propulsion unit (3) of an aerial vehicle (1) comprising:
at least one, preferably electric or electronic, heat source (M, T);
a propulsion force generating air flow path (10) along which air for generating a propulsion force is configured to flow; **characterized in that** the propulsion unit (3) further comprises
a branch-off portion (11) which is configured to branch-off part of the air flow flowing along the propulsion force generating air flow path (10), wherein
the propulsion unit (3) is configured such that the at least one heat source (M, T) is cooled via the air flow supplied by the branch-off portion (11).

2. The electrically driven propulsion unit (3) of an aerial vehicle (1) according to claim 1, wherein the branch-off portion (11) comprises a guiding portion (113) configured to guide at least part of the branched-off air flow towards and/or along, the at least one heat source (M, T).

3. The propulsion unit (3) of an aerial vehicle (1) according to claim 2, wherein the guiding portion comprises a first wall part (114a) having a front side exposed to at least part of the branched-off air flow,
wherein, preferably,
the first wall part (114a) contacts with the heat source (M, T), and/or
at least part of the first wall part (114a) is formed by at least part of the heat source (M, T), and/or
the first wall part (114a) has an overlapping portion overlapping with the heat source (M, T) in a direction substantially perpendicular to the direction of the branched-off air flow.

4. The electrically driven propulsion unit (3) of an aerial vehicle (1) according to claim 3, wherein the heat source (M, T) is arranged at least partially at a back side facing away from the front side of the first wall part (114a), preferably at the overlapping portion thereof, and preferably, is attached to a back surface (114a2) of the front side.

5. The electrically driven propulsion unit (3) of an aerial vehicle (1) according to claim 3 or claim 4, wherein the guiding portion comprises a channel portion (114) comprising the first wall part (114a) and having at least one channel in which at least part of the branched-off air flow is configured to flow and which is at least partially formed by the first wall part (114a), and which is preferably formed at least partially by a second wall part (114b) arranged to substantially face the first wall part (114a).

6. The electrically driven propulsion unit (3) of an aerial (1) according to any of claims 3 to 5, wherein, in a section perpendicular to a center axis (Ax2) of the propulsion unit (3) and, preferably, at least in the overlapping portion, the first wall part (114a) is at least partially arranged to extend substantially along a circumferential direction around the center axis (Ax2) of the propulsion unit (3) and/or to extend substantially straight along a direction perpendicular to the center axis (Ax2), and/or has a shape of an arc, preferably, a substantially circular arc, more preferably, being arranged concentrically with respect to the center axis (Ax2) of the propulsion unit (3), and/or
in a section perpendicular to a center axis (Ax2) of the propulsion unit (3) and, preferably, at least at the overlapping portion, the channel portion (114) is arranged to extend at least partially substantially along a circumferential direction around the center axis (Ax2) of the propulsion unit (3), and/or has a shape of a ring segment, an entire ring, or a circle segment, preferably, being arranged concentrically with respect to the center axis of the propulsion unit (3).

7. The electrically driven propulsion unit (3) of an aerial vehicle (1) according to any of the preceding claims, wherein a plurality of branch-off portions are provided, preferably arranged substantially along a circumferential direction around a center axis (Ax2), and/or
the channel portion has a plurality of channels, preferably arranged side by side, more preferably, substantially along a circumferential direction around a center axis (Ax2) or substantially straight along a direction perpendicular to the center axis (Ax2).

8. The electrically driven propulsion unit (3) of an aerial vehicle (1) according to any of claims 3 to 7, wherein the branch-off portion (11) further comprises a heat exchange surface increasing portion provided on at least part of the front side of the first wall part (114a), preferably the overlapping portion, and configured to be exposed to at least part of the branched-off air flow,
preferably, the heat exchange surface increasing portion comprises at least one, even more preferably, a plurality of at least one of a pin, a fin, and a lattice structure, which are particularly preferably curved in a flow direction of the branched-off air flow.

9. The electrically driven propulsion unit (3) of an aerial vehicle (1) according to any of claims 3 to 8, wherein the branch-off portion (11) further comprises a connecting portion (116) connected to the first wall part, preferably the overlapping portion, and bridging at least part of the branched-off air flow to make heat conductive connection to another wall part exposed to the branched-off air flow and/or air flow other than the branched-off air flow, preferably bridging the at least one channel of the channel portion, more preferably connecting the first and second wall part (114a, 114b) together across the at least one channel,
in particular preferably, the connecting portion (116) comprises at least one, even more preferably, a plurality of at least one of a pin, a fin, and a lattice structure.

10. The electrically driven propulsion unit (3) of an aerial vehicle (1) according to any of the preceding claims, wherein the branch-off portion (11) at least partially, preferably entirely, extends inside of the propulsion force generating air flow path (10).

11. The electrically driven propulsion unit (3) of an aerial vehicle (1) according to any of the preceding claims, wherein the branch-off portion (11) comprises at least one inlet (111, 111a, 111b), preferably located downstream of a rotating unit (7) of the propulsion unit (3), wherein, more preferably, the at least one inlet comprises one of a scoop inlet (111a, 111b) and a NACA inlet (111a),
and, in particular preferably, further comprises at least one outlet (112) downstream with respect to the branched-off air flow of the inlet (111).

12. The electrically driven propulsion unit (3) of an aerial vehicle (1) according to any of the preceding claims, wherein the propulsion unit (3) comprises at least one movable part (115) which is movable between a branch-off state and a reduced branch-off state in which the air flow supplied towards the heat source (M, T) is reduced, preferably completely suppressed, with respect to the branch-off state,
preferably, the movable part (115) is configured to at least partially, preferably entirely, close the branch-off portion (11) and/or
in at least the branch-off state, the movable part (115) is configured to protrude into the propulsion force generating air flow path (10).

13. The electrically driven propulsion unit (3) of an aerial vehicle (1) according to any of the preceding claims, wherein the heat source comprises or is one of a rotary electric machine, preferably an electric motor (M) configured to drive a rotating unit (7), and an electronic component (T), preferably an ECU, for controlling the propulsion unit (3), and/or
in a section perpendicular to a center axis (Ax2) of the propulsion unit (3), the heat source (M, T) has an outer periphery extending at least partially substantially along a circumferential direction around a center axis (Ax2) of the propulsion unit or extending at least partially substantially straight along a direction perpendicular to the center axis (Ax2) of the propulsion unit, and/or
the heat source (M,T) is arranged concentrically with respect to the first wall part (114a), and/or
at least part of an outer periphery has the shape of an arc, preferably, a substantially circular arc, a circle, a ring segment or a ring, preferably being arranged concentrically with respect to a center axis (Ax2) of the propulsion unit (3), and/or
a plurality of heat sources (M, T), preferably contact portions contacting with the first wall part thereof, are arranged substantially along a circumferential direction around a center axis (Ax2) of the propulsion unit (3).

14. An aerial vehicle (1), preferably, a vertical-take-off-and-landing aerial vehicle, comprising the electrically driven propulsion unit (3) according to any of the preceding claims,
wherein, preferably, the aerial vehicle (1) is configured such that a movable part (115) of the propulsion unit (3) which is movable between a branch-off state and a reduced branch-off state in which the air flow supplied towards the at least one heat source (M, T) is reduced, preferably completely suppressed, with respect to the branch-off state, is moved to the reduced branch-off state during forward flight of the aerial vehicle (1) and to the branch-off state during hovering and/or substantially vertical flight of the aerial vehicle (1),
even more preferably, the aerial vehicle (1) comprises a link mechanism for moving the movable part between the branch-off state and the reduced branch-off state.

15. Control method for an electrically driven propulsion unit (3) according to claim 12, comprising the step of controlling the movable part (115) to be moved to the reduced branch-off state during forward flight of the aerial vehicle (1) and to the branch-off state during hovering and/or substantially vertical flight of the aerial vehicle (1) and/or
controlling the movable part (115) to be moved between the branch-off state and the reduced branch-off state depending on a power output state of the propulsion unit (3), preferably controlling the movable part (115) to the branch-off state when a power output threshold is exceeded.
